# EUROPÄISCHE PATENTSCHRIFT

(11) **EP 3 449 148 B1**
(45) Veröffentlichungstag und Bekanntmachung des Hinweises auf die Patenterteilung: **27.01.2021**
(21) Anmeldenummer: 17725517.1
(22) Anmeldetag: 27.04.2017
(51) Int. Cl.: F16D 65/12

(54) **BREMSSCHEIBE FÜR EIN FAHRZEUG**
BRAKE DISC FOR A VEHICLE
DISQUE DE FREIN POUR UN VÉHICULE

(30) Priorität: 27.04.2016 DE 102016107823
(43) Veröffentlichungstag der Anmeldung: 06.03.2019
(73) Patentinhaber: Iprotec Maschinen- und Edelstahlprodukte GmbH, 32469 Petershagen-Friedewalde (DE)
(72) Erfinder: MAYER, Ralph, 09111 Chemnitz (DE); PANDER, Lutz, 09113 Chemnitz (DE)
(74) Vertreter: Rausch Wanischeck-Bergmann Brinkmann
(86) Internationale Anmeldenummer: PCT/EP2017/060100
(87) Internationale Veröffentlichungsnummer: WO 2017/186867

(56) Entgegenhaltungen:
- WO-A2-2015/058314
- DE-A1- 19 830 666
- DE-A1-102008 019 263

## Beschreibung

Die Erfindung betrifft eine Bremsscheibe für ein Fahrzeug, insbesondere für einen Personenkraftwagen. Solche Bremsscheiben weisen einen Reibring und ein Trägerteil auf, das in Bezug auf die für den Gebrauch vorgesehene Drehachse der Bremsscheibe konzentrisch ausgerichtet in der Innenöffnung des Reibrings angeordnet ist, wobei am äußeren Umfang des Trägerteils und am inneren Umfang des Reibrings zueinander korrespondierend geformte und formschlüssig ineinander greifende Mitnehmerkonturen geformt sind, so dass eine in Umfangsrichtung drehfeste Verbindung zwischen dem Reibring und dem Trägerteil gebildet ist (siehe z. B. Dokument DE19830666 A1).

Konventionelle Bremsscheiben werden regelmäßig als einstückige Eisengussteile hergestellt, bei denen das typischerweise als Bremsscheibentopf ausgebildete Trägerteil und der Reibring unlösbar einstückig miteinander verbunden sind. Man spricht bei diesem Bremsscheibentyp auch von einem "integrierten Bremsscheibentopf" oder einer "massiven Bremsscheibe". Der Vorteil der Einstückigkeit besteht darin, dass sich solche Bremsscheiben kostengünstig gießtechnisch herstellen lassen. Diesem Vorteil steht allerdings ein vergleichbar hohes Gewicht und ein kritisches Verhalten der Bremsscheibe bei hohen Belastungen gegenüber. So kann es beim Abbremsen aus hohen Geschwindigkeiten in Folge der dabei auftretenden Wärmespannungen zu Verformungen des Reibrings kommen, die sich als Vibrationen im Fahrwerk oder in der Lenkung des Fahrzeugs bemerkbar machen.

Da Bremsscheiben zusammen mit den Rädern jeder Fahrbahnunebenheit folgen, werden sie zu den "ungefederten Massen" eines Fahrzeugs gezählt. Das Gewicht einer Bremsscheibe hat daher wesentlichen Einfluss auf die fahrdynamischen Eigenschaften eines Fahrzeugs. Aus Gründen des Fahrkomforts und der Fahrsicherheit wird allgemein ein geringer Quotient von ungefederter Masse zu gefederter Masse angestrebt.

Eine Minimierung des Bremsscheibengewichts konnte durch die Entwicklung von Bremsscheiben erreicht werden, bei denen der Bremsscheibentopf aus einer Leichtmetalllegierung und der beim Bremsen sowohl thermisch als auch mechanisch belastete Reibring aus einer geeigneten Eisengusslegierung gefertigt ist.

Ein Beispiel für eine solche mehrteilige Bremsscheibe ist aus der EP 1 355 075 B1 bekannt. Diese bekannte Verbund-Bremsscheibe weist einen Bremsscheibentopf auf, an dem ein Bremsscheibenreibring oder ein den Reibring tragender Mitnehmer abseits der Reibring-Ebene über einen geeigneten Vorsprung befestigt ist, wobei Nieten oder ähnliche Verbindungselemente zwischen der Topfwand und dem Vorsprung vorgesehen sind. Der Bremsscheibentopf kann dabei aus Aluminiumwerkstoff bestehen, während der Bremsring aus einem Eisengussmaterial hergestellt ist.

Ein anderes Beispiel für eine Bremsscheibe, deren Bremsscheibentopf aus einem Blechmaterial tiefgezogen ist, während der Reibring aus einem Eisengussmaterial besteht, ist in der DE 44 20 758 A1 beschrieben. Um die Bremsscheibe zu vereinfachen und ihre Herstellungskosten sowie ihr Gewicht zu senken, ist dabei vorgesehen, dass der Reibring an seinem inneren Randbereich mit Ausnehmungen und nach innen ragenden Zähnen versehen ist und dass das Halteteil an seinem äußeren Randbereich abwechselnd über den Umfang verteilte Sicherungszungen und Anschlagzungen aufweist. Dabei greifen nach außen umgebördelte Enden der Sicherungszungen in die Ausnehmungen des Reibrings in Bezug auf die Drehrichtung formschlüssig ein. Gleichzeitig umgreifen die umgebogenen Enden der Anschlagzungen die Zähne des Reibrings und bilden so in Axialrichtung einen formschlüssigen Anschlag für den Reibring.

Des Weiteren ist aus der DE 10 2011 011 004 A1 eine Verbundbremsscheibe der eingangs genannten Art bekannt, welche ebenfalls insbesondere für ein Kraftfahrzeug bestimmt ist. Die Bremsscheibe ist wiederum aus einem als Bremsscheibentopf geformten Trägerteil und einem zugehörigen Bremsring zusammengesetzt, welche hier durch einen Fügeprozesses miteinander verbunden sind. In Folge des Fügeprozesses greifen bei der fertigen Bremsscheibe in einem Fügebereich eine innenseitige, als Bremsring-Zahnprofil ausgebildete Mitnehmerkontur in ein am Umfang des Trägerteils ausgebildetes Zahnprofil, das eine mit der Mitnehmerkontur des Trägerteils zusammenwirkende Mitnehmerkontur bildet. Dabei weist das Trägerteil-Zahnprofil Trägerteil-Zahnflanken in Kreisbogen-Form auf, wogegen das Bremsring-Zahnprofil Bremsring-Zahnflanken in Evolventen-Form besitzt. Aufgrund dieser speziellen Paarungsausführung zweier unterschiedlicher Verzahnungen soll eine feste, belastbare Verbindung zwischen dem Bremsscheibentopf und dem Bremsring erreicht werden.

Vor dem Hintergrund des Standes der Technik hat sich die Aufgabe ergeben, eine hinsichtlich der Einfachheit ihrer Herstellung und hinsichtlich ihrer Dauerhaltbarkeit weiter verbesserte Bremsscheibe zu schaffen.

Die Erfindung löst diese Aufgabe durch eine gemäß Anspruch 1 ausgebildete Bremsscheibe.

Vorteilhafte Ausgestaltungen der Erfindung sind in den abhängigen Ansprüchen angegeben und werden nachfolgend wie der allgemeine Erfindungsgedanke im Einzelnen erläutert.

Eine erfindungsgemäße Bremsscheibe für ein Fahrzeug, insbesondere für Personenkraftwagen ("PKW"), umfasst demnach in Übereinstimmung mit dem voranstehend erläuterten Stand der Technik einen Reibring und ein Trägerteil, das in Bezug auf die für den Gebrauch vorgesehene Drehachse der Bremsscheibe konzentrisch ausgerichtet in die Innenöffnung des Reibrings eingefügt ist. Dabei sind am äußeren Umfang des Trägerteils und am inneren Umfang des Reibrings zueinander korrespondierend geformte und formschlüssig ineinander greifende Mitnehmerkonturen derart geformt, dass eine in Umfangsrichtung drehfeste Verbindung zwischen dem Reibring und dem Trägerteil gebildet ist.

Erfindungsgemäß weisen nun bei einem solchen Reibring in einem zur vorgesehenen Drehachse des Reibrings normal ausgerichteten Schnitt durch die Bremsscheibe gesehen die Mitnehmerkonturen in Umfangsrichtung der Innenöffnung einen gleichmäßigen wellenförmigen Umfangsverlauf auf, bei dem in einer sprungfreien Abfolge mindestens dreimal eine Auswölbung einer Einwölbung folgt.

Bei einer erfindungsgemäßen Bremsscheibe sind die zusammenwirkenden Mitnehmerkonturen von Trägerteil und Reibring somit so geformt, dass bei jeder der Mitnehmerkonturen die Übergänge zwischen ausgewölbten, als Vorsprünge ausgebildeten Abschnitten, die formschlüssig in korrespondierend geformte eingewölbte Abschnitte der jeweils anderen Mitnehmerkontur greifen, und den eingewölbten Abschnitten, in die die ausgewölbten Vorsprünge der anderen Mitnehmerkontur greifen, sprungfrei ineinander übergehen. Die Mitnehmerkonturen von Trägerteil und Reibring bilden so einen kontinuierlich wellenförmig um das jeweilige Bauteil umlaufenden Kurvenzug, bei denen die Einwölbungen und Auswölbungen regelmäßig aufeinander folgen.

Die Einwölbungen und Auswölbungen der Mitnehmerkonturen sind durch eine Abfolge von Kreisbogenabschnitten gebildet, die kontinuierlich ineinander übergehen. Die Mitnehmerkonturen von Reibring und Trägerteil einer erfindungsgemäßen Bremsscheibe bilden so einen gleichmäßig wechselnden, geschlossenen Kurvenverlauf.

Ein wesentlicher Vorteil der erfindungsgemäßen Ausgestaltung der Verbindung zwischen Reibring und Trägerteil einer Bremsscheibe besteht darin, dass im Bereich der Mitnehmerkonturen von Trägerteil und Reibring keinerlei Kerben oder sonstige Ecken oder Kanten vorhanden sind, an denen Flächenabschnitte der Mitnehmerkonturen scharfkantig aufeinander treffen. Stattdessen gehen bei einer erfindungsgemäßen Bremsscheibe die aufeinander folgenden eingewölbten und ausgewölbten Abschnitte in einem kontinuierlichen Verlauf ineinander über, so dass jegliche Kerbwirkung im Bereich der Mitnehmerkonturen vermieden wird.

Hinzu kommt, dass sich die erfindungsgemäße Formgebung der Mitnehmerkontur von Reibring und Trägerteil auf einfache Weise herstellen lässt. Wie bereits erwähnt, bilden die erfindungsgemäß vorgesehenen Mitnehmerkonturen geschlossene Zykloiden, wie beispielsweise Trochoiden, Epitrochoiden, reine Hypotrochoiden oder hybride Trochoiden, die in an sich bekannter Weise mathematisch beschreibbar und durch aufeinander abwälzende Kreise darstellbar sind.

Im Fall, dass der Reibring gießtechnisch erzeugt werden soll, kann die zur Abbildung der Mitnehmerkontur des Reibrings benötigte Form somit auf einfache Weise dargestellt werden. Ebenso ist es möglich, durch eine spanabhebende Bearbeitung die erfindungsgemäße Formgebung der Mitnehmerkontur zu erzeugen. Dies kann beispielsweise durch konventionelle Drehverfahren, wie dem NC-gesteuerten Formdrehen oder dem Unrunddrehen, erfolgen, wie sie beispielsweise in Fritz Klocke, Wilfried König "Fertigungsverfahren", 8. Auflage, 2008, ISBN 978-3-540-23458-6, Seiten 423 - 425, beschrieben sind. Im Fall, dass das Trägerteil aus einem Blechzuschnitt geformt werden soll, lässt sich auch das Werkzeug, welches zur Abformung der Mitnehmerkontur am Trägerteil vorgesehen ist, auf entsprechend einfache Weise erzeugen.

Genauso einfach ist es möglich, das Trägerteil in die Öffnung des Reibrings einzufügen. Als besonders vorteilhaft erweist sich dabei, dass bei den erfindungsgemäß geformten Mitnehmerkonturen die Zentrierung des Trägerteils in Bezug auf den Reibring über den gesamten Umfangsverlauf der jeweiligen Mitnehmerkontur erfolgt. So erfolgt die lagerichtige Fixierung des Trägerteils in der Reibringöffnung nicht alleine über die Flanken von nach Art von Zähnen einer Außen- (Trägerteil) bzw. Innenverzahnung (Reibring) ausgebildeten Vorsprüngen, sondern über den gesamten Umfang des jeweiligen ausgewölbten Vorsprungs bzw. der jeweiligen Einwölbung, d.h. vom Fußbereich über die Flanken und den Kopfbereich des jeweiligen Vorsprungs.

Dies erlaubt es, die Mitnehmerkonturen des Reibrings und des in ihn eingepassten Trägerteils so aufeinander abzustimmen, dass die Mitnehmerkonturen des Reibrings und des Trägerteils über ihren gesamten Umfangsverlauf einander berühren. Es besteht dann im Bereich der Mitnehmerkonturen ein durchgangsspaltfreier dichter Kontakt zwischen den einander zugeordneten Umfangsflächen von Reibring und Trägerteil. Durch die dichte Anlage der Mitnehmerkonturen wird verhindert, dass sich bei einem Bremsvorgang das Trägerteil oder der Reibring in Folge der beim Bremsen auftretenden Momente oder der damit einhergehenden Erwärmung des Reibrings so verformen, dass sich zwischen den Mitnehmerkonturen Spalte bilden. Auf diese Weise wird bei einer erfindungsgemäßen Bremsscheibe das Eindringen von korrosiven Medien in den Fügebereich verhindert, wodurch die Gefahr vorzeitiger Beschädigung durch Korrosion vermindert ist. Kostenträchtige und in ihrer Wirkung häufig zweifelhafte Korrosionsschutzmaßnahmen können so vermieden werden.

Ebenso wirkt die erfindungsgemäße Gestaltung der Mitnehmerkonturen aufgrund des mit der Erfindung ermöglichten großflächigen, sich über deren gesamten Umfangsverlauf erstreckenden Kontakts und des damit einhergehenden sicheren Halts zwischen den Mitnehmerkonturen der Gefahr entgegen, dass die Bremsscheibe bei einem Bremsvorgang auf dem Trägerteil in axialer Richtung verrutscht.

Auch wird die Entstehung von Spannungsspitzen, die insbesondere im Reibring zu Schäden führen könnten, ebenso sicher vermieden. Dies erlaubt die Übertragung hoher Bremsmomente vom Reibring auf das Trägerteil. Auch können bei gleicher Leistungsfähigkeit die Abmessungen des Reibrings minimiert werden, ohne dass dadurch die Gefahr eines Versagens in Folge zu hoher innerer Spannungen im Bereich der Anbindung an das Trägerelement ausgelöst wird.

Da auch die auf das Trägerteil wirkenden Kräfte in Folge der erfindungsgemäßen Gestaltung der Mitnehmerkonturen von Reibring und Trägerteil gleichmäßiger über den Umfang verteilt sind, kann das Trägerteil ebenfalls schwächer ausgelegt werden als bei konventionell geformten Bremsscheiben. Dies erlaubt es beispielsweise, an Stelle eines aus einem ausreichend festen Stahlmaterial gefertigten und damit hoch belastbaren Trägerteils ein aus einem Leichtmetallwerkstoff gefertigtes Trägerteil zu verwenden und damit einhergehend eine gewichtsoptimierte Bremsscheibe zu erhalten.

Als besonders günstig erweist sich die Erfindung bei solchen Bremsscheibenkonstruktionen, bei denen das Trägerteil topförmig ausgebildet ist und einen umlaufenden Umfangsabschnitt aufweist, an dem seine Mitnehmerkontur ausgebildet ist. Der Umfangsabschnitt kann in diesem Fall dünnwandig ausgebildet werden, so dass er nicht nur auf einfache Weise mit der erfindungsgemäß vorgeschlagenen Kontur versehen werden kann, sondern auch auf einfache Weise mit seiner Mitnehmerkontur in die Mitnehmerkontur des Reibrings eingepasst werden kann.

Dementsprechend erweist es sich im Hinblick auf die Vereinfachung der Herstellung als besonders vorteilhaft, dass auch bei einer erfindungsgemäßen Bremsscheibe der Reibring und das Trägerteil separat voneinander vorgefertigt und in einer Fügeoperation zusammengefügt sein können. Als geeignete, eine passgenaue Befestigung des Reibrings auf dem Trägerteil mit einfachen Mitteln ermöglichende Ausgestaltung der Erfindung ist dabei dadurch gekennzeichnet, dass das Trägerteil mit seiner Mitnehmerkontur in die Mitnehmerkontur des Reibrings eingepresst ist. Hierzu kann der Reibring wie beim eingangs gewürdigten Stand der Technik aus einem Eisengussmaterial gegossen und das Trägerteil aus einem Blechmaterial geformt sein. Insbesondere eignen sich für diesen Zweck Trägerteile, die aus einem Leichtmetall- oder einem Stahlblech geformt sind.

Nachfolgend wird die Erfindung anhand einer Ausführungsbeispiele darstellenden Zeichnung näher erläutert. Deren Figuren zeigen jeweils schematisch:

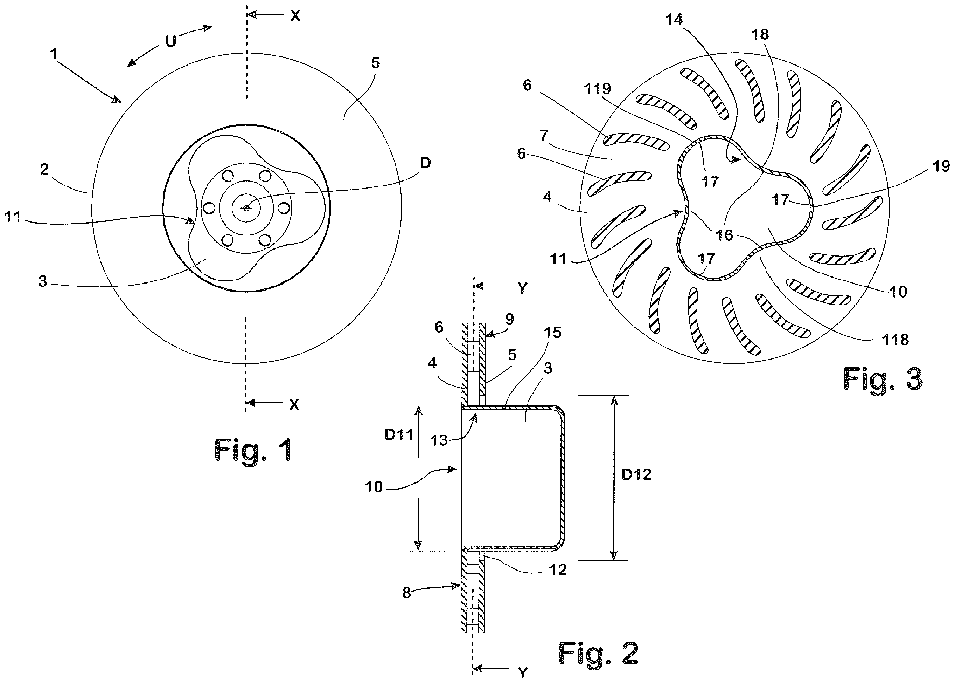

- Fig. 1: eine Bremsscheibe in einer frontalen, stirnseitigen Ansicht;
- Fig. 2: die Bremsscheibe gemäß Fig. 1 in einem Schnitt entlang der in Fig. 1 eingezeichneten Schnittlinie X-X;
- Fig. 3: die Bremsscheibe gemäß Fig. 1 und 2 in einem Schnitt entlang der in Fig. 2 eingezeichneten Schnittlinie Y-Y;

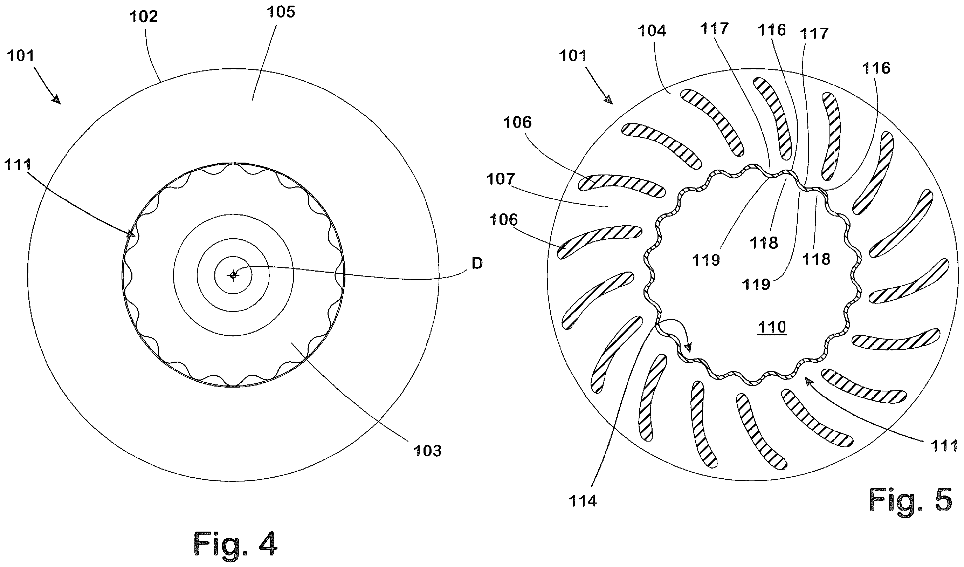

- Fig. 4: eine alternative Ausgestaltung einer Bremsscheibe in einer der Fig. 1 entsprechenden Ansicht;
- Fig. 5: die Bremsscheibe gemäß Fig. 4 in einer der Fig. 3 entsprechenden Schnittansicht.

Die in den Figuren gezeigten Bremsscheiben 1,101 sind jeweils als Verbundbremsscheiben aus einem Reibring 2,102 und einem nach Art eines Bremsscheibentopfs ausgebildeten Trägerteil 3,103 zusammengesetzt.

Der Reibring 2,102 der Bremsscheiben 1,101 ist dabei jeweils gießtechnisch aus einem für diese Zwecke legierten Eisengussmaterial hergestellt, wogegen das Trägerteil 3,103 der Bremsscheiben 1,101 jeweils aus einem für diese Zwecke ebenfalls an sich bekannten Stahlblechmaterial durch Tiefziehen geformt ist. Die Reibringe 2,102 und Trägerteile 3,103 sind in separaten Arbeitsgängen unabhängig voneinander hergestellt worden.

Der einstückig gegossene, als in an sich bekannter Weise innenbelüfteter Ring ausgebildeter Reibring 2,102 der Bremsscheiben 1,101 weist zwei in Richtung der für die Nutzung der Bremsscheibe 1,101 vorgesehenen Drehachse D beabstandet zueinander angeordnete Reibringscheiben 4,5;104,105 auf, die durch in gleichmäßigen Winkelabständen verteilt angeordnete, sich in radialer Richtung zwischen den Reibringscheiben 4,5;104,105 erstreckende Rippen 6,106 miteinander so verbunden sind, dass zwischen benachbarten Rippen 6,106 jeweils ein in radialer Richtung sich erstreckender Belüftungskanal 7,107 gebildet ist. Die Reibringscheiben 4,5;104,105 weisen auf ihren jeweils außen liegenden Stirnflächen jeweils eine Reibfläche 8,9 auf, auf die im Gebrauch die Bremsbacken der Bremseinrichtung des Fahrzeugs wirken, an dem die Bremsscheibem 1,101 montiert sind.

Die eine Reibringscheibe 4,104 weist an der Innenfläche, mit der sie die Innenöffnung 10,110 der jeweiligen Bremsscheibe 1,101 umgrenzt, eine Mitnehmerkontur 11,111 auf, wogegen bei der anderen Reibringscheibe 5,105 die Öffnung 12 einen Durchmesser D12 aufweist, der größer ist als der größte Umfangsdurchmesser D11 der Mitnehmerkontur 11,111.

Auf diese Weise kann das jeweilige Trägerteil 3,103 mit Spiel durch die Öffnung 12 der einen Reibringscheibe 5,105 geführt werden, während es mit seinem im Fußbereich des Trägerteils 3,103 ausgebildeten Umfangsabschnitt 13 in die Innenöffnung 10,110 eingepresst ist.

Zu diesem Zweck weist das Trägerteil 3,103 mindestens im Bereich seines betreffenden, in die Innenöffnung 10,110 eingepassten Fußabschnitts 13 eine Mitnehmerkontur 14,114 auf. Aus fertigungstechnischer Sicht bevorzugt ist dabei, dass sich die Mitnehmerkontur 14,114 über die gesamte Höhe der Umfangswandung 15 des jeweiligen Trägerteils 3,103 erstreckt, wie in den Figuren dargestellt.

Bei der Bremsscheibe 1 weist die Mitnehmerkontur 11 der Reibringscheibe 4 drei in gleichmäßigen Winkelabständen um die Drehachse D verteilt angeordnete, kreisbogenförmig geformte Einwölbungen 16 auf, auf die jeweils eine ebenso kreisbogenförmige Auswölbung 17 folgt. Dabei gehen die Einwölbungen 16 nach Art eines geschlossenen, wellenförmigen Kurvenzugs in Umfangsrichtung U aufeinanderfolgend in die jeweils anschließende Auswölbung 17 sprungfrei über.

In entsprechend umgekehrter Folge weist die Mitnehmerkontur 14 des Trägerteils 2 drei in gleichmäßigen Winkelabständen um die Drehachse D verteilte Auswölbungen 18 und drei Einwölbungen 19 auf, von denen jeweils eine zwischen zwei benachbarten Auswölbungen 18 angeordnet sind.

Bei der Mitnehmerkontur 14 korrespondieren die Form der Auswölbungen 18 und Einwölbungen 19 sowie ihre kontinuierliche Abfolge dabei derart mit der Form und Abfolge der Einwölbungen 16 und Auswölbungen 17 der Mitnehmerkontur 11 des Reibrings 2, dass die Mitnehmerkontur 14 formschlüssig passgenau und spaltfrei in der Mitnehmerkontur 11 sitzt. Die inneren Umfangsflächen der Mitnehmerkontur 11 liegen dabei so dicht und passgenau an den äußeren Umfangsflächen der Mitnehmerkontur 14 an, dass im Gebrauch auch unter der Last eines Bremsmoments keine Spalte entstehen, in die Feuchtigkeit eindringen kann. Dementsprechend muss allenfalls ein minimierter Aufwand für den Korrosionsschutz im Bereich der Fügezone zwischen den Mitnehmerkonturen 11,14 getrieben werden.

Die Gestaltung der Mitnehmerkonturen 111,114 des Reibrings 102 und des Trägerteils 103 der Bremsscheibe 101 folgt demselben Prinzip wie bei der Bremsscheibe 1.

Im Unterschied zur Bremsscheibe 1 weisen die Mitnehmerkonturen 111,114 bei der Bremsscheibe 101 jedoch jeweils achtzehn zueinander korrespondierend geformte Einwölbungen 116 (Mitnehmerkontur 111 an der Reibringscheibe 104 des Reibrings 102),119 (Mitnehmerkontur 114 am Trägerteil 103) und Auswölbungen 117 (Mitnehmerkontur 111 an der Reibringscheibe 104 des Reibrings 102),118 (Mitnehmerkontur 114 am Trägerteil 103) auf, wobei auch hier jeweils eine Auswölbung 117,119 zwischen benachbarten Einwölbungen 116,119 angeordnet ist und die Auswölbungen 117,118 jeweils sprungfrei und kontinuierlich in die angrenzenden Einwölbungen übergehen.

Auch das Trägerteil 103 ist mit seiner Mitnehmerkontur 114 so passgenau formschlüssig in die Mitnehmerkontur 111 des Reibrings 102 eingepasst, dass die Mitnehmerkontur 114 mit ihren Umfangsflächen dauerhaft dicht an den Innenumfangsflächen der Mitnehmerkontur 111 des Reibrings 102 anliegt.

### BEZUGSZEICHEN

- 1,101: Bremsscheiben
- 2,102: Reibring
- 3,103: Trägerteil
- 4,104: Reibringscheiben
- 5,105: Reibringscheiben
- 6,106: Rippen
- 7,107: Belüftungskanal
- 8,9: Reibflächen
- 10,110: Innenöffnungen der jeweiligen Bremsscheibe 1,101
- 11,111: Mitnehmerkonturen
- 12: Öffnungen der Reibringscheiben 5,105
- 13: Umfangsabschnitte im Fußbereich des Trägerteils 3,103
- 14,114: Mitnehmerkonturen des Trägerteils 3,103
- 15: Umfangswandung
- 16: Einwölbungen der Mitnehmerkontur 11
- 116: Einwölbungen der Mitnehmerkontur 111
- 17: Auswölbungen der Mitnehmerkontur 11
- 117: Auswölbungen der Mitnehmerkontur 111
- 18: Auswölbungen der Mitnehmerkontur 14
- 118: Auswölbungen der Mitnehmerkontur 114
- 19: Einwölbungen der Mitnehmerkontur 14
- 119: Einwölbungen der Mitnehmerkontur 114

- D: Drehachse der Bremsscheibe
- D12: Durchmesser der Öffnung 12
- D11: Umfangsdurchmesser der Mitnehmerkontur 11,111
- U: Umfangsrichtung

## Patentansprüche

1. Bremsscheibe für ein Fahrzeug, mit einem Reibring (2, 102) und einem Trägerteil (3, 103), das in Bezug auf die für den Gebrauch vorgesehene Drehachse (D) der Bremsscheibe (1, 101) konzentrisch ausgerichtet in die Innenöffnung (10, 110) des Reibrings (2, 102) eingefügt ist, wobei am äußeren Umfang des Trägerteils (3, 103) und am inneren Umfang des Reibrings (2, 102) zueinander korrespondierend geformte und formschlüssig ineinander greifende Mitnehmerkonturen (11, 14; 111, 114) geformt sind, so dass eine in Umfangsrichtung (U) drehfeste Verbindung zwischen dem Reibring (2, 102) und dem Trägerteil (3, 103) gebildet ist, wobei in einem zur vorgesehenen Drehachse (D) des Reibrings (2, 102) normal ausgerichteten Schnitt durch die Bremsscheibe (1, 101) gesehen die Mitnehmerkonturen (11, 14; 111, 114) in Umfangsrichtung (U) der Innenöffnung (10, 110) einen gleichmäßigen wellenförmigen Umfangsverlauf aufweisen, bei dem in einer sprungfreien Abfolge mindestens dreimal eine Auswölbung (17, 117, 18, 118) einer Einwölbung (16, 116, 19, 119) folgt,
**dadurch gekennzeichnet,**
**dass** die Mitnehmerkonturen (11, 14; 111, 114) geschlossene Zykloiden bilden.

2. Bremsscheibe nach Anspruch 1, **dadurch gekennzeichnet, dass** die Mitnehmerkonturen (11, 14; 111, 114) des Reibrings (2, 102) und des Trägerteils (3, 103) über ihren gesamten Umfangsverlauf dicht aneinander liegen.

3. Bremsscheibe nach einem der voranstehenden Ansprüche, **dadurch gekennzeichnet, dass** das Trägerteil (3, 103) topfförmig ausgebildet ist und einen umlaufenden Umfangsabschnitt (13) aufweist, an dem die Mitnehmerkontur (14, 114) ausgebildet ist.

4. Bremsscheibe nach einem der voranstehenden Ansprüche, **dadurch gekennzeichnet, dass** der Reibring (2, 102) und das Trägerteil (3, 103) separat voneinander vorgefertigt und in einer Fügeoperation zusammengefügt sind.

5. Bremsscheibe nach Anspruch 4, **dadurch gekennzeichnet, dass** das Trägerteil (3, 103) mit seiner Mitnehmerkontur (14; 114) in die Mitnehmerkontur (11, 111) des Reibrings (2, 102) eingepresst ist.

6. Bremsscheibe nach einem der Ansprüche 4 oder 5, **dadurch gekennzeichnet, dass** der Reibring (2, 102) aus einem Eisengussmaterial gegossen und das Trägerteil (3, 103) aus einem Blechmaterial geformt ist.

7. Bremsscheibe nach Anspruch 6, **dadurch gekennzeichnet, dass** das Trägerteil (3, 103) aus einem Stahlblech geformt ist.

## Claims

1. A brake disk for a vehicle, comprising a friction ring (2, 102) and a support element (3, 103), which is inserted in a concentrically oriented manner in the inner opening (10, 110) of the friction ring (2, 102) with respect to the rotation axis (D) provided for use of the brake disk (1, 101), wherein driving contours (11, 14; 111, 114), which are formed correspondingly to each other and which positively interlock, are formed on the outer periphery of the support element (3, 103) and on the inner periphery of the friction ring (2, 102), such that a connection that is torque-proof in the circumferential direction (U) is formed between the friction ring (2, 102) and the support element (3, 103), wherein seen in a sectional view oriented perpendicularly to the provided rotation axis (D) of the friction ring (2, 102) through the brake disk (1, 101), the driving contours (11, 14; 111, 114) comprise a regular wavelike circumferential extension in the circumferential direction (U) of the inner opening (10, 110), in which in a leap-free sequence at least three times a bulge (17, 117, 18, 118) follow an indentation (16, 116, 19, 119),
**characterized in**
**that** the driving contours (11, 14; 111, 114) form closed cycloids.

2. A brake disk according to claim 1, **characterized in that** the driving contours (11, 14; 111, 114) of the friction ring (2, 102) and the support element (3, 103) lie closely next to each other over their entire circumferential extension.

3. A brake disk according to one of the preceding claims, **characterized in that** the support element (3, 103) is pot-shaped and comprises a circumferential section (13), on which the driving contour (14, 14) is formed.

4. A brake disk according to one of the preceding claims, **characterized in that** the friction ring (2, 102) and the support element (3, 103) are pre-fabricated separately from each other and are assembled in an assembling operation.

5. A brake disk according to claim 4, **characterized in that** the support element (3, 101) is pressed with its driving contour (14, 114) into the driving contour (11, 111) of the friction ring (2, 102).

6. A brake disk according to one of the claims 4 or 5, **characterized in that** the friction ring (2, 102) is cast of an iron casting material and the support element (3, 103) is formed of a sheet metal material.

7. A brake disk according to claim 6, **characterized in that** the support element (3, 103) is made of a steel sheet.

## Revendications

1. Disque de frein pour un véhicule, comprenant une bague de friction (2, 102) et un élément de support (3, 103), qui est inséré de manière orientée concentriquement dans l'ouverture intérieure (10, 110) de la bague de friction (2, 102) par rapport à l'axe de rotation (D) prévu pour l'utilisation du disque de frein (1, 101), dans lequel des contours entraîneurs (11, 14 ; 111, 114), qui sont formés de manière correspondante l'un à l'autre et qui viennent en prise les uns dans les autres par complémentarité de forme, sont formés sur la périphérie extérieure de l'élément de support (3, 103) et sur la périphérie intérieure de la bague de friction (2, 102), de sorte qu'une liaison solidaire en rotation dans la direction circonférentielle (U) est établie entre la bague de friction (2, 102) et l'élément de support (3, 103), dans lequel, selon une vue en coupe à travers le disque de frein (1, 101), laquelle vue est orientée perpendiculairement à l'axe de rotation (D) prévu, les contours entraîneurs (11, 14 ; 111, 114) comprennent une extension circonférentielle régulière onduleuse dans la direction circonférentielle (U) de l'ouverture intérieure (10, 110), dans laquelle extension une convexité (17, 117, 18, 118) suit au moins trois fois à une concavité (16, 116, 19, 119) dans une séquence sans interruption,
**caractérisé en ce**
**que** les contours entraîneurs (11, 14 ; 111, 114) forment des cycloïdes fermées.

2. Disque de frein selon la revendication 1, **caractérisé en ce que** les contours entraîneurs (11, 14 ; 111, 114) de la bague de friction (2, 102) et de l'élément de support (3, 103) sont en contact serré les uns avec les autres sur leur extension circonférentielle entière.

3. Disque de frein selon l'une des revendications précédentes, **caractérisé en ce que** l'élément de support (3, 103) est en forme de pot et comprend une section circonférentielle (13), sur laquelle le contour entraîneur (14, 114) est formé.

4. Disque de frein selon l'une des revendications précédentes, **caractérisé en ce que** la bague de friction (2, 102) et l'élément de support (3, 103) sont préfabriqués séparément l'un de l'autre et sont assemblés dans une opération d'assemblage.

5. Disque de frein selon la revendication 4, **caractérisé en ce que** l'élément de support (3, 103) est pressé avec son contour entraîneur (14, 114) dans le contour entraîneur (11, 111) de la bague de friction (2, 102).

6. Disque de frein selon la revendication 4 ou la revendication 5, **caractérisé en ce que** la bague de friction (2, 102) est moulée en un matériau de moulage en fer et l'élément de support (3, 103) est formé en un matériau en tôle.

7. Disque de frein selon la revendication 6, **caractérisé en ce que** l'élément de support (3, 103) est formé en une tôle d'acier.
